Europäisches Patentamt

European Patent Office

Office européen des brevets

(19)

(11) Publication number:

**0 067 141**
**A1**

## EUROPEAN PATENT APPLICATION

(12)

(21) Application number: 82850126.2

(22) Date of filing: 07.06.82

(51) Int. Cl.³: **A 01 C 11/02**

(30) Priority: **10.06.81 SE 8103646**

(43) Date of publication of application: **15.12.82**
**Bulletin 82/50**

(84) Designated Contracting States: **BE DE FR GB NL**

(71) Applicant: **ERGONOMI DESIGN GRUPPEN AB,**
**Missionsvägen 24, S-161 14 Bromma (SE)**
Applicant: **Tullinge Teknik HB, Skogshemsvägen 14,**
**S-146 00 Tullinge (SE)**

(72) Inventor: **Crafoord, Carl-Göran, Sigurdsvägen 17,**
**S-182 64 Djursholm (SE)**
Inventor: **Granlind, Ingmar, Skogshemsvägen 14,**
**S-146 00 Tullinge (SE)**

(74) Representative: **Säfwenberg, Björn et al, Axel Ehrners**
**Patentbyra AB Smalandsgatan 2, S-114 34 Stockholm**
**(SE)**

(54) **Device for the planting of cuttings.**

(57) The invention provides a device for the planting of cuttings in a plurality of planting rows (1,2), which device includes a storage (47) for a plurality of cuttings (48), a magazine (16) for separate cuttings and planting means (23, 24) for individual cuttings. The magazine (16) is rotatable and annular and for each planting row (1, 2) provided with a plurality of magazine chambers (19, 20) arranged along a circle. The magazine chambers for different planting rows are located on concentring circles. The storage (47) is located within the annular magazine (16). For each planting row (1, 2) is provided a planting means (23, 24) which substantially is located at a point along the respective circle.

1

DEVICE FOR THE PLANTING OF CUTTINGS

The present invention relates to a device for the planting of cuttings according to the preamble of claim 1.

The object of the invention is to provide a device of that kind, which is simple to operate by a single person and which permits planting of cuttings along at least two planting rows simultaneously.

This object has been achieved in that the invention has been given the characteristics stated in the subsequent claims.

An embodiment of the invention will now be described under reference to the attached drawings, wherein

Fig. 1 schematically shows a device according to the invention from the side,
Fig. 2 shows the same from above, and,
Fig. 3 schematically shows a section through the magazine and the planting means.

The device shown in the drawings, which is adapted for planting of two rows 1 and 2 of cuttings, is built-up on a four-wheeled vehicle 3 having two steerable wheels 4 and 5, and two driving sheels 6 and 7. On the frame 8 of the vehicle is mounted a driving aggregate 9, including a non-shown motor and a gearbox. By means of a chain 10 the driving aggregate 9 stands in driving connection with the common shaft 11 of the driving wheels 6 and 7. In the example shown, one single control stick 12 serves for actuation of the driving aggregate 9 as well as for steering of the steerable wheels 4 and 5 by means of an electrically driven linear motor 13.

On the frame 8 of the vehicle is mounted a stand 14 which includes a stationary circular disc 15. On this disc is rotatably arranged an annular magazine 16, comprising an

2

upper ring disc 17 and a lower ring disc 18 between which is a plurality of outer and inner magazine chambers 19 and 20, respectively, which are arranged along two concentric circles with an equal number of chambers along each circle. The magazine chambers are cylindrical tubes, which open in corresponding apertures in the ring discs 17 and 18.

In the stationary disc 15 there is an opening 21, which is located on the same circle as the outer magazine chambers 19, and, diametrically opposite the opening 21 an opening 22, which is located on the same circle as the inner magazine chambers 20.

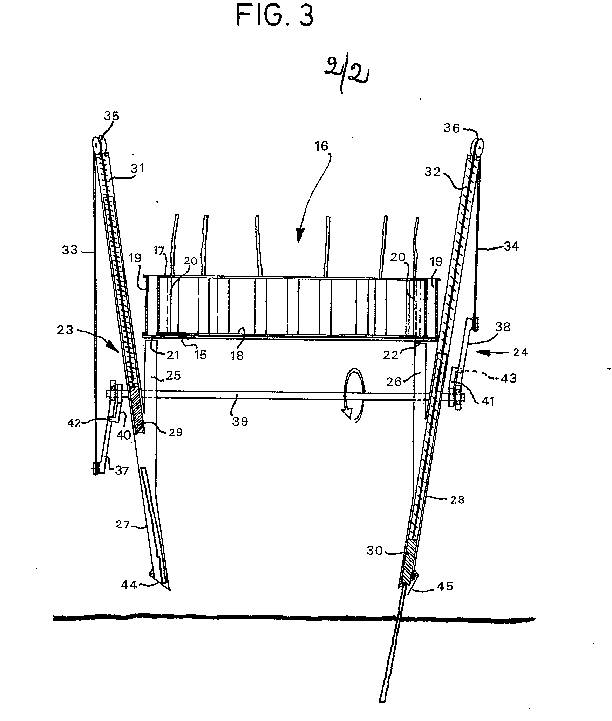

On the left and right hand side of the magazine planting means 23 and 24, respectively, are mounted at the stand 14. These means comprise vertical tubes 25 and 26, respectively, that upwards are connected to the opening 21 and 22, respectively, and downwards open into outwardly inclined tubes 27 and 28, respectively. Pistons 29 and 30, respectively, are slideable within the tubes 27 and 28, the pistons being urged downwardly by springs 31 and 32, respectively. The pistons 29 and 30 are attached to cords 33 and 34, respectively, which extend through the springs 31 and 32, respectively, up to pulleys 35 and 36, respectively. From these pulleys the cords extend downwardly to the free end of arms 37 and 38, respectively, which are freely rotatably journalled on a transverse shaft 39 being driveable in the direction of the arrow of Fig. 3. Inwardly of the arms 37, 38 drive arms 40 and 41, respectively, are fixedly mounted on the shaft 39 with 180$^\circ$ angular spacing, said drive arms having fingers 42 and 43, respectively, capable of actuating the arms 37 and 38, respectively.

In their lower ends the tubes 27 and 28 are preferably obliquely cut-off and openably closed by spring-loaded shutters 44 and 45, respectively.

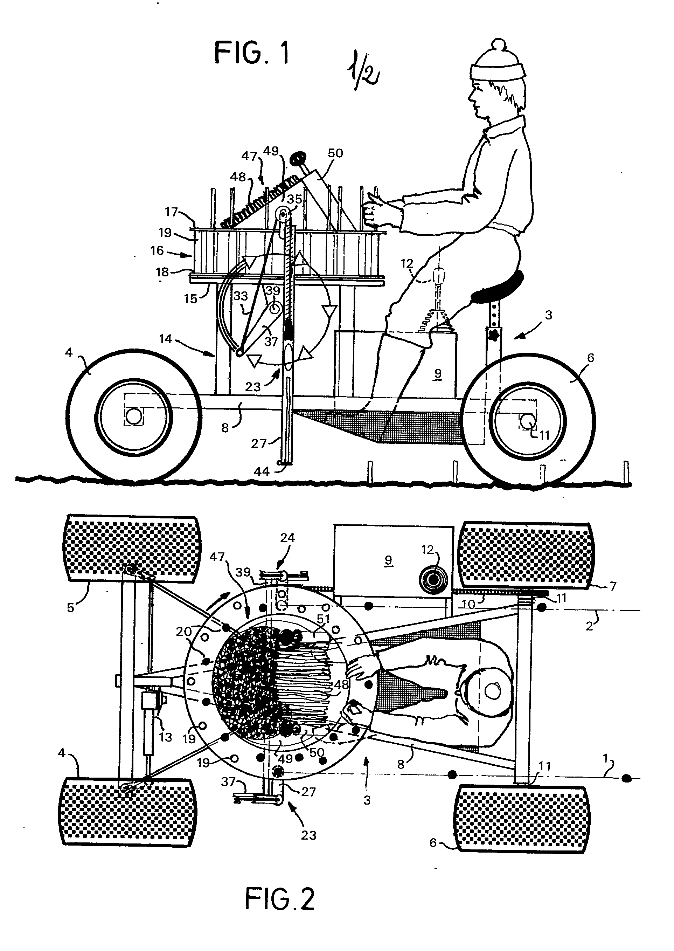

The shaft 39 is selectively driveable over a chain from the driving aggregate 12. Synchronously with this driving also the magazine 16 is continuously or intermittently driven in clock-wise rotation according to Fig. 2 in a manner not shown. The driving of the magazine 16 can suitably take place over a toothed gear, which engages in the outer circle of magazine chambers 19, which then serve as teeth and are more closely spaced than what is shown in Fig. 2.

Within the magazine 16 there is a storage 47 for a plurality of cuttings 48 which are kept leaning forwards supported by a cloth 49, the free length of which manually may be shortened by winding up on one or both of two rolls 50 and 51, so that the cuttings can be easily reached by the operator of the device.

At planting the vehicle 3 is driven in a direction along the intended planting rows 1 and 2, and the driving aggregate 9 is set such that the shaft 39 and the magazine 16 are simultaneously driven. The operator continuously picks cuttings from the storage 47 and puts them in the magazine chambers 19 and 20 in front of him. When an outer magazine chamber 19 gets over the opening 21 a cutting falls down into the tube 25 and when an inner magazine chamber 20 gets over the opening 22 a cutting falls down into the tube 26. In Fig. 2 magazine chambers with a cutting are marked with a filled circle.

At actuation of the shaft 39 the fingers 42, 43 of the drive arms 40,41 alternatingly bring the arms 37 and 38 downwards under tensioning of the respective one of the springs 31 and 32 and raising of the respective one of the pistons 29 and 30. In Fig. 3 the left arm 37 is shown having reached its lowermost position and the piston 29 its uppermost position. A cutting has fallen from the magazine chamber 19 through the opening 21 and the tube 25 down into the tube 27 and is resting on the shutter 44. After some further rotation of the

4

shaft 39 the arm 37 has passed its lowermost position, whereupon the spring 31 pushes the piston 29 downwards, which is possible due to the free journalling of the arm 37 on the shaft 39. On its way downwards the piston strikes the cutting, whereby the shutter 44 is opened and the cutting is forced down into the ground. This position is shown for the right hand side planting means, where the drive arm 41 with its finger 42 is just about to return the arm 38 downwards and raise the piston 30 thereby giving room for another cutting which will fall from the subsequent magazine chamber 20 down through the tube 26 to the tube 28.

If, for some reason, a cutting should not be pushed down so far into the ground that a piston reaches its lowermost position, i.e. such that the cutting does not leave the tube 27 or 28, it is suitable that the planting means are resiliently pivotable backwards about a point at the upper ends of the tubes 25 and 26. Hereby the lower ends of the tubes 27 and 28 will be drawn backwards by the cutting until the cutting has left the tube. This is indicated in Fig. 1 by a dashed arrow.

## C L A I M S

1. A device for the planting of cuttings in a plurality of planting rows (1,2), including a storage (47) for a plurality of cuttings (48), a magazine (16) for separate cuttings and planting means (23,24) for individual cuttings, c h a r a c t e r i z e d   i n   that the magazine (16) is annular and for each planting row (1,2) is provided with a plurality of magazine chambers (19,20) arranged along a circle, all such circles being concentric; that the storage (47) is located within  the annular magazine (16); and that for each planting row (1,2) is provided a planting means (23,24) which substantially is located at a point along the respective circle.

2. A device according to claim 1, c h a r a c t e r i z e d   i n   that the magazine chambers (19,20) have through-holes, that the magazine (16) is rotatable on a stationary disc (15), which is provided with an opening (21,22) for each circle of magazine chambers (19,20), and that each planting means (23,24) includes a feed tube (25,26) connected to the respective opening (12,22), said feed tube being connected to a planting tube (27,28) having means (29,30,31,32) for forcing down cuttings.

3. A device according to claim 2, c h a r a c t e r i z e d   i n   that the means for forcing down the cuttings include a piston (29,30) being movable within the planting tube (27, 28), said piston being urged in the forcing down direction by a spring (31,32) which is adapted to be tensioned when the piston (29,30) is brought past the junction region between the feed tube (25,26) and the planting tube (27,28).

6

4. A device according to claim 3, c h a r a c t e r i z e d
i n that the piston (29,30) is attached to one end of a
cord (33,34), the other end of which is attached to a
rotatable arm (37,38), which is so arranged as to alternatingly pull and release the cord.

5. A device according to claim 4, c h a r a c t e r i z e d
i n that the arm (37,38) is freely rotatably journalled on
a rotating shaft (39), which is provided with a fixed drive
arm (40,41), that is adapted to actuate the arm by means of
a finger (42,43).

6. A device according to any one of claims 2-5, c h a r a c-
t e r i z e d i n that the planting tube is provided in
its bottom end with a spring-loaded shutter (44,45).

7. A device according to any one of claims 2-6, c h a r a c -
t e r i z e d i n that the planting tube (27,28) is
resiliently pivotable backwards relative to the direction
of planting about a point located at the upper end of the
feed tube (25,26).

# FIG. 1

1/2

# FIG.2

FIG. 3

0067141

2/2

**European Patent Office**

## EUROPEAN SEARCH REPORT

Application number

EP 82 85 0126

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A- 980 842 (BANKS GARVIE) * Page 1, lines 74-92; page 2, lines 1-56; figures 1-7 * | 1,2 | A 01 C 11/02 |
| A | DE-A-2 628 548 (WOLF-GERÄTE) * Pages 10-17; figures 1-24 * | 1 | |
| A | FR-A-2 423 124 (SERLACHIUS) | | |

|  | TECHNICAL FIELDS SEARCHED (Int. Cl. ³) |
|---|---|
|  | A 01 C |

The present search report has been drawn up for all claims

| Place of search | Date of completion of the search | Examiner |
|---|---|---|
| THE HAGUE | 03-09-1982 | VERMANDER R.H. |